# FASCICULE DE BREVET EUROPEEN

(11) **EP 0 718 583 B1**
(45) Date de publication et mention de la délivrance du brevet: **08.03.2000**
(21) Numéro de dépôt: 95402781.9
(22) Date de dépôt: 11.12.1995
(51) Int. Cl.: F28F 9/02, F28D 9/00, B01D 1/10, B01D 1/22

(54) **Appareil à circulation de fluide**
Vorrichtung zur Zirkulation eines Fluids
Apparatus for the circulation of a fluid

(30) Priorité: 23.12.1994 FR 9415619
(43) Date de publication de la demande: 26.06.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR); NORDON CRYOGENIE SNC, 88194 Golbey (FR)
(72) Inventeur: Gerard, Claude, F-88000 Chantraine (FR); Lehmann, Jean-Yves, F-94700 Maisons-Alfort (FR)
(74) Mandataire: Jacobson, Claude

(56) Documents cités:
- EP-A- 0 010 083
- EP-A- 0 566 435
- H. Titze, "Elemente des Apparatebaues", Springer-Verlag, 1963, pages 127 à 129 et 205

## Description

La présente invention est relative à un appareil à circulation de fluide suivant le préambule de la revendication 1 (voir par exemple le EP-0 566 435 A1).

L'invention s'applique en particulier aux échangeurs de chaleur, du type thermosiphon ou du type à film ruisselant, traitant notamment au moins un fluide diphasique, tels que les vaporiseurs-condenseurs des installations de distillation d'air, les évaporateurs des groupes frigorifiques, les rebouilleurs des colonnes à distiller, ou encore à certains échangeurs de chaleur disposés dans des espaces réduits, tels que les échangeurs inter-étages de certains compresseurs.

L'invention a pour but de fournir une chambre d'entrée/sortie facile à raccorder à des contours rectangulaires ou carrés, résistant particulièrement bien à la pression intérieure et offrant une souplesse de raccordement de conduites d'amenée ou d'évacuation de fluide.

A cet effet, l'invention a pour objet un appareil tel que défini ci-dessus, caractérisé par la partie caractérisante de la revendication 1.

Des modes de réalisation avantageux sont décrits dans les revendications 2 à 12.

Des exemples de réalisation de l'invention vont maintenant être décrits en regard des dessins annexés, sur lesquels :
- la Figure 1 est une vue partielle de côté d'un échangeur de chaleur suivant l'invention;
- la Figure 2 est une vue de dessus de cet échangeur;
- les Figures 3 et 4 sont des vues respectivement analogues aux Figures 1 et 2 mais correspondant à une variante;
- la Figure 5 est une vue, prise en regardant suivant la flèche V de la Figure 6, d'un autre échangeur de chaleur suivant l'invention;
- la Figure 6 est une vue de dessus de l'échangeur de la Figure 5;
- la Figure 7 est une vue prise suivant la flèche VII de la Figure 6;
- la Figure 8 est une vue prise suivant la flèche VIII de la Figure 6, illustrant une variante;
- la Figure 9 est une vue analogue à la Figure 5 d'une autre variante;
- la Figure 10 est une vue de dessus d'un autre échangeur de chaleur suivant l'invention; et
- la Figure 11 est une vue prise suivant la flèche XI de la Figure 10.

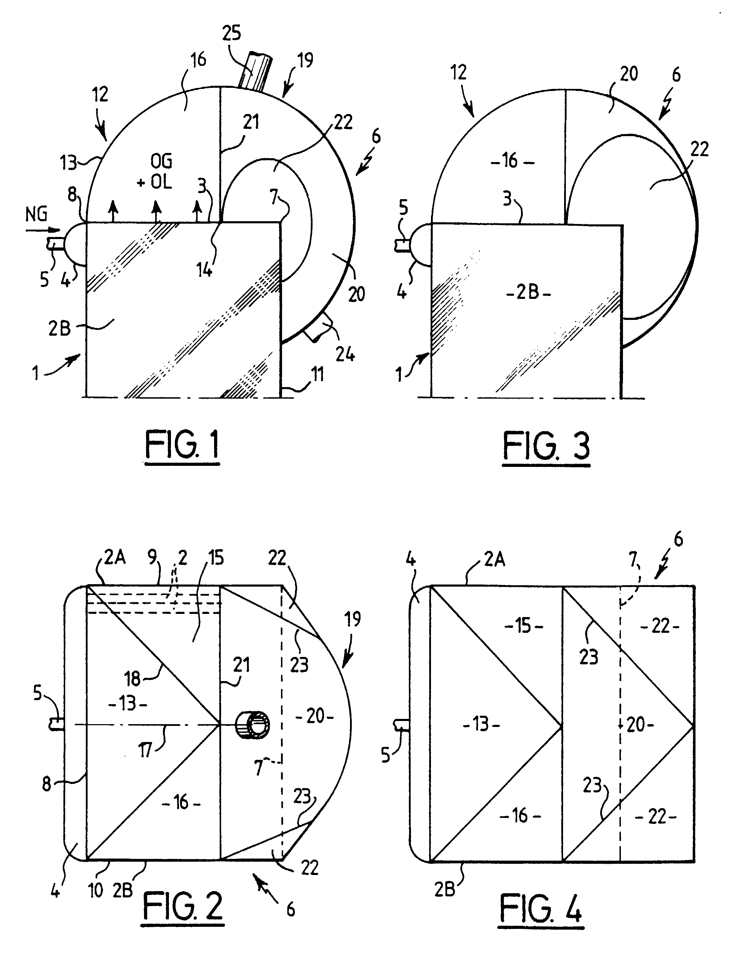

Les Figures 1 et 2 représentent schématiquement la partie supérieure d'un corps d'échangeur 1 de forme parallélépipédique allongé dans le sens vertical, du type à plaques brasées. Il s'agit par exemple du vaporiseur-condenseur principal d'une double colonne de distillation d'air, du type thermosiphon, destiné à vaporiser de l'oxygène liquide sous la pression atmosphérique ou sous une pression plus élevée, pouvant aller jusqu'à 5 bars absolus ou davantage, par condensation d'azote. Dans la suite, on se réfèrera à cet exemple.

Plus particulièrement, le corps 1 est constitué d'un empilement de plaques rectangulaires 2, verticales et parallèles, entre lesquelles sont interposées des ondes-entretoises formant également ailettes thermiques. Chaque paire de plaques 2 délimite un passage de forme générale plate. Il existe au moins deux séries de passages, dont l'une est réservée à la circulation de l'oxygène, constituant le fluide traité, tandis que l'autre sert à faire circuler l'azote, qui constitue le fluide auxiliaire calorigène en cours de condensation.

Sur leur périphérie, les passages sont fermés par des barres. Les barres correspondant au fluide traité sont toutefois supprimées sur la face supérieure 3 du corps 1, et également sur sa face inférieure.L'échangeur fonctionne ainsi en thermosiphon, avec une circulation ascendante d'oxygène vaporisé, entraînant de l'oxygène liquide. Le mélange diphasique sort du corps 2 par sa face supérieure 3.

Les barres de fermeture sont par ailleurs agencées de façon à laisser libres, sur les faces latérales verticales du corps 1, des rangées horizontales de fenêtres d'entrée/sortie de l'azote. Ces fenêtres sont coiffées par des boîtes d'entrée/sortie de forme générale cylindrique, telle que la boîte 4 représentée au dessin, prévue à la partie supérieure du corps et servant à l'entrée d'azote gazeux dans les passages d'azote, laquelle boîte est alimentée par une conduite 5.

Le corps 1 est complété par un ballon 6 qui sera décrit en détail plus loin.

Le corps 1 est réalisé par empilement des plaques, entretoises et barres, et brasage au four en une seule étape. Les boîtes d'entrée-sortie telles que la boîte 4 sont rapportées sur le corps 1 par soudage, de même que la chambre 6.

Le ballon 6 chevauche l'arête supérieure 7 du corps 1 opposée à la boîte 4. Il présente une large ouverture d'un seul tenant dont le bord, situé dans deux plans perpendiculaires l'un à l'autre, est relié à joint étanche par soudage à la face 3 le long de l'arête supérieure 8 du corps opposée à l'arête 7, et le long des deux autres arêtes supérieures 9 et 10 du corps 1. Le bord du ballon 6 est de plus relié à joint étanche par soudage à la face verticale 11 du corps 1 adjacente à la face 3 du côté de l'arête 7. Cette face 11 sera désignée dans la suite par "face avant", pour plus de commodité.

Le ballon 6 comporte une partie arrière 12 en demi-dôme, constituée de trois tôles :
- une tôle médiane 13 en quart de cylindre, à axe horizontal 14 contenu dans la face supérieure 3 du corps d'échangeur 1 et parallèle aux arêtes 7 et 8, cette tôle 13 partant de l'arête arrière 8, et
- deux tôles latérales cylindriques 15, 16 de même rayon que la tôle 13, d'axe commun 17 contenu dans la face 3 et perpendiculaire en son milieu à l'arête 7, ces deux tôles partant respectivement des deux arêtes latérales 9, 10 de la même face 3.

Les trois tôles 13 et 15 sont soudées les unes aux autres le long de leur double courbe d'insertion 18, qui a une forme en V à angle droit en vue de dessus (Figure 2).

Le ballon 6 est complété par une partie avant 19 sphéro-conique. Plus précisément, cette partie avant comprend essentiellement une demi-sphère 20 tronquée qui part vers l'avant du demi-cercle limite 21 des tôles 15 et 16, lequel est situé à l'aplomb de l'axe 14, et qui chevauche l'arête supérieure avant 7 du corps 1. De chaque côté, il est prévu une tôle 22 en trois-quarts de cône dont le sommet se trouve sur le coin supérieur avant correspondant du corps 1, ces cônes ayant une ouverture telle qu'ils se raccordent tangentiellement à la demi-sphère, le long d'un cercle 23, et qu'ils aient une génératrice confondue avec l'arête 9, 10 respective. Les portions de la demi-sphère situées dans les cercles 23 sont retirées.

Grâce à cet agencement, il est possible d'effectuer des soudures linéaires du bord du ballon le long des trois arêtes supérieures 8 à 10 du corps d'échangeur, et de compléter la liaison étanche du ballon au corps sur la face avant 11. Cette liaison s'effectue le long des bords verticaux de la face 11, sur une longueur correspondant à la génératrice des cônes 22, puis le long d'un arc de cercle correspondant à l'intersection de la demi-sphère 20 et de la face 11.

La variante des Figures 3 et 4 ne diffère de la précédente que par le fait que le sommet des cônes 22, 23 est ramené vers l'avant jusque dans le plan vertical tangent à la demi-sphère 20, de sorte que l'angle d'ouverture de ces cônes est 90°.

On voit que le bord de l'ouverture du ballon 6 est soudé le long de l'arête 8, qui est constituée de tranches d'extrémité supérieure des plaques 2 et de barres de fermeture, le long des arêtes 9 et 10, constituées des tranches d'extrémité supérieure des plaques extrêmes 2A et 2B, et sur la face avant 11, constituée des tranches d'extrémité verticales des plaques 2 et de barres de fermeture.

En fonctionnement, l'oxygène diphasique sortant de la face 3 du corps d'échangeur est recueillie dans le ballon 6, qui forme séparateur de phases et dont la partie en saillie vers l'avant par rapport au corps 1 forme une capacité de stockage de liquide. L'oxygène liquide est évacué, en vue de son recyclage à la base de l'échangeur, via un orifice de sortie de liquide 24 situé près du point bas du ballon, tandis que l'oxygène gazeux est évacué via un orifice de sortie de gaz 25 situé au voisinage du point haut du ballon. Les deux orifices 24 et 25 se trouvent sur la demi-sphère 20.

Dans une variante non représentée, le ballon 6 pourrait être en saillie des deux côtés, avant et arrière, du corps 1. Pour cela, on remplacerait les tôles 13, 15 et 16 par une unique tôle semi-cylindrique d'axe 17, et on disposerait sur le côté arrière une partie de ballon identique à la partie 19, chevauchant l'arête 8 et reliée d'une part à la tôle semi-cylindrique et aux arêtes 9 et 10, d'autre part à la face arrière du corps d'échangeur.

En variante encore, la largeur du ballon 6, c'est-à-dire sa dimension verticale sur la Figure 2, peut être inférieure à celle du corps 1. Dans ce cas, de préférence, une tôle semi-cylindrique d'axe 17 ou d'axe parallèle à cet axe 17 est interposée entre les parties 12 et 15 du ballon.

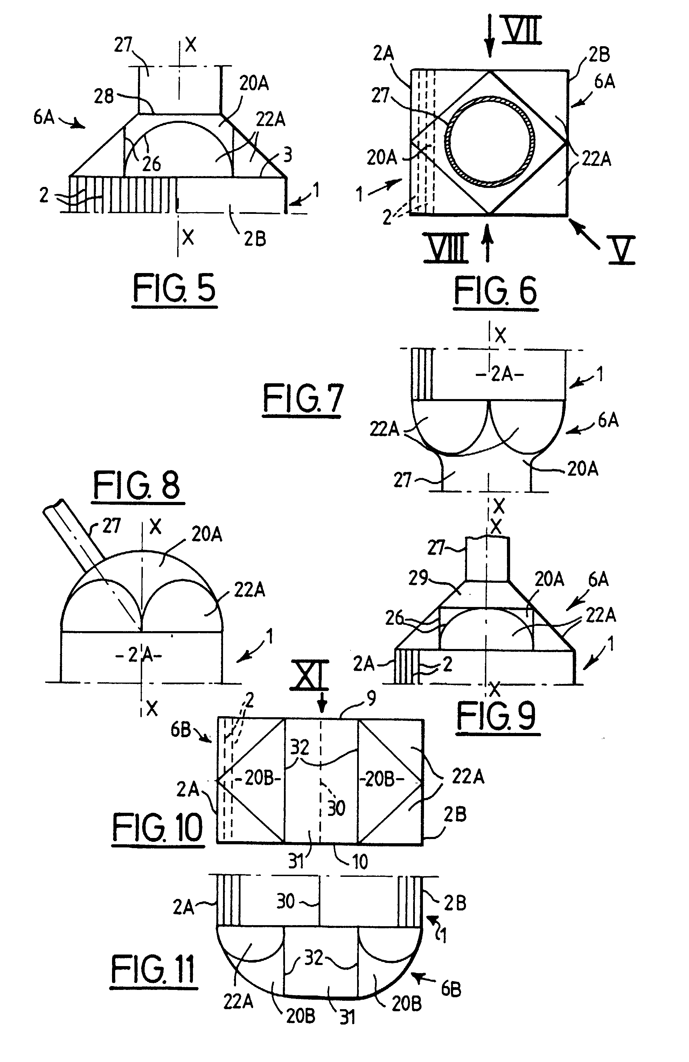

Les Figures 5 à 7 représentent un dôme 6A d'entrée ou de sortie de fluide, relié par soudage le long de la totalité de la périphérie de la face supérieure 3 du corps d'échangeur 1, laquelle a une forme carrée. Ce dôme est constitué de cinq tôles :
- une tôle centrale hémisphérique 20A, dont l'axe central vertical X-X est confondu avec celui de la face 3; et
- quatre tôles 22A en demi-cônes d'ouverture 90°. Chaque tôle 22A a son sommet sur un coin de la face 3, et est tangent à la tôle 20A le long d'un demi-cercle 26.

Les portions de la demi-sphère délimitées par les demi-cercles 26 sont retirées, et les tôles 20A, 22A sont soudées ensemble le long de ces quatre demi-cercles. La liaison du dôme 6A au corps 1 est effectuée le long des huit génératrices inférieures des demi-cônes.

Le dôme 6A, comme le ballon 6 des Figures 1 à 4, est facile à relier à un corps d'échangeur parallélépipédique. De plus, ils résistent particulièrement bien aux pressions internes, de sorte qu'on peut les utiliser dans de nombreuses applications où le fluide amené ou évacué à travers eux est sous pression.

On a également représenté sur les Figures 5 à 7 une conduite cylindrique 27 d'amenée ou d'évacuation du fluide, reliée directement, le long d'un cercle 28, à la demi-sphère 20A, cette conduite étant d'axe X-X. La calotte supérieure de la tôle 20A située dans le cercle 28 est alors, bien entendu, retirée.

Cependant, comme illustré sur la Figure 8, la conduite 27 peut être inclinée par rapport à l'axe X-X, d'autant plus que son diamètre est plus petit, l'essentiel étant que tout le pourtour de cette conduite coupe la demi-sphère.

On voit ainsi que la constitution du dôme 6A offre une grande liberté de piquage des conduites d'amenée ou d'évacuation. Ceci, à son tour, permet de faciliter le raccordement du corps d'échangeur à des appareils disposant d'un espace relativement réduit, par exemple dans le cas de certains échangeurs de chaleur inter-étages de compresseurs.

En variante (Figure 9), pour adoucir la transition entre la conduite 27 et la cavité du dôme, et par suite réduire les pertes de charge, une tôle de transition 29 en tronc de cône, d'axe confondu avec celui de la conduite et d'ouverture égale par exemple à 90°, peut être reliée par sa petite base à la conduite et par sa grande base à la tôle 20A.

Les Figures 10 et 11 représentent une variante 6B du dôme 6A, adaptée au cas d'une face 3 rectangulaire, par exemple du fait que le corps 1 est constitué de deux corps d'échangeur identiques soudés côte à côte le long d'une ligne verticale de soudure 30.

Dans ce cas, le dôme 6B est réalisé en divisant le dôme 6A en deux demi-dômes comprenant chacun un quart de sphère 20B et deux demi-cônes 22A, et en ajoutant une tôle supplémentaire 31 semi-cylindrique reliée par ses extrémités axiales aux demi-cercles limites 32 des tôles 20B et par ses bords aux arêtes latérales 9 et 10 du corps d'échangeur.

On comprend qu'un tel agencement permet d'allonger à volonté le dôme, de sorte que la même structure peut également être utilisée pour constituer les boîtes d'entrée/sortie de l'échangeur, telles que la boîte 4 des Figures 1 et 2.

Dans d'autres variantes non représentées, la forme de la chambre 6, 6A, 6B peut être modifiée par affinité, horizontale ou verticale, dans un sens ou dans l'autre, ce qui transforme les cylindres circulaires en cylindres circulaires ou elliptiques, les sphères en ellipsoïdes et les cônes en cônes.

Par ailleurs, quelle que soit la forme de la chambre, celle-ci peut être réalisée à partir d'une tôle unique par déformation, en particulier par emboutissage, formage progressif du type forgeage, etc. On peut aussi partir d'un petit nombre de tôles, dont le découpage ne correspond pas nécessairement aux différentes surfaces géométriques décrites plus haut.

Dans tous les cas, la chambre suivant l'invention est constituée de surfaces tangentes les unes aux autres le long de leurs lignes de raccordement. Ceci apporte une continuité avantageuse du champ de contraintes qui se développe sous l'effet de la pression.

## Revendications

1. Appareil à circulation de fluide, comprenant une partie de corps (1) qui comporte une face (3) d'entrée ou de sortie d'un fluide, et une chambre d'entrée/sortie (6; 6A; 6B) dudit fluide, reliée à joint étanche à cette face, caractérisé en ce qu'une partie au moins de la chambre est constituée par au moins une portion de sphère ou d'ellipsoïde (20; 20A; 20B) et par des secteurs de cônes (22; 22A) tangents à cette portion de sphère ou d'ellipsoïde et dont des génératrices extrêmes forment des lignes de liaison étanche de la chambre à ladite partie de corps.

2. Appareil suivant la revendication 1, caractérisé en ce que la chambre (6A; 6B) est reliée à la totalité du pourtour (8 à 10) de ladite face (3), laquelle est rectangulaire ou carrée, et en ce que la chambre (6A; 6B) comprend, d'une part, deux premières surfaces (20A; 20B) en forme de portions de sphère ou d'ellipsoïde, ces premières surfaces étant sensiblement tangentes à deux côtés opposés du rectangle ou du carré, et d'autre part quatre secondes surfaces (22A) en forme de secteurs de cônes dont les sommets se trouvent sur les quatre coins de ladite face, respectivement, et tangents deux à deux aux deux premières surfaces (20A; 20B).

3. Appareil selon la revendication 2, caractérisé en ce que lesdites portions de sphère ou d'ellipsoide sont des quarts de sphère ou d'ellipsoide dont un plan méridien est contenu dans ladite face (3), et en ce que les secteurs de cônes (22A) sont des demi-cônes ayant une ouverture de 90°.

4. Appareil suivant la revendication 2 ou 3, caractérisé en ce que ladite face (3) est carrée et en ce que les deux premières surfaces sont réunies en une surface sphérique unique (20A).

5. Appareil suivant la revendication 2 ou 3, caractérisé en ce que ladite face (3) comporte deux petits côtés et deux grands côtés, en ce que lesdits côtés opposés sont les petits côtés, et en ce que la chambre (6B) comporte en outre une surface cylindrique (30) reliée aux bords circulaires, perpendiculaires à ladite face, des deux premières surfaces (20B).

6. Appareil suivant l'une quelconque des revendications 1 à 5, caractérisé en ce que la chambre comporte un tuyau d'alimentation ou d'évacuation (24, 25; 27) piqué directement sur la portion de sphère ou d'ellipsoïde (20; 20A; 20B).

7. Appareil suivant l'une quelconque des revendications 1 à 5, caractérisé en ce que la chambre comporte un tuyau d'alimentation ou d'évacuation (27) piqué sur la portion de sphère ou d'ellipsoïde (20A) par l'intermédiaire d'une surface de transition (28) en forme de tronc de cône, notamment tangente à la portion de sphère ou d'ellipsoïde.

8. Appareil suivant l'une quelconque des revendications 1 à 7, caractérisé en ce que la chambre fait saillie, par rapport à ladite partie de corps (1), au-delà de ladite face (3), et est également reliée à joint étanche à la face adjacente (11) de ladite partie de corps.

9. Appareil suivant la revendication 8, caractérisé en ce que la portion de sphère ou d'ellipsoïde (20) est une demi-sphère ou un demi-ellipsoïde coiffant l'arête (7) de jonction des deux faces (3, 11), et en ce que la chambre (6) comprend en outre une autre partie (12) formée de trois surfaces cylindriques (13, 15, 16) à axes perpendiculaires entre eux.

10. Appareil suivant l'une quelconque des revendications 1 à 9, caractérisé en ce que la chambre est entièrement constituée de surfaces, notamment sphériques ou ellipsoïdales, coniques et cylindriques, qui se raccordent tangentiellement les unes aux autres.

11. Appareil suivant l'une quelconque des revendications 1 à 10, caractérisé en ce que ladite partie de corps (1) est formée d'un empilement de plaques parallèles (2) définissant entre elles des passages plats, d'ondes-entretoises disposées entre ces plaques, et de barres de fermeture des passages, les barres correspondant audit fluide laissant libre une entrée ou une sortie de ce fluide sur ladite face (3), et en ce que la chambre (6; 6A; 6B) n'est reliée à ladite partie de corps (1) que sur des zones (3, 11; 3) de celle-ci formées par des tranches d'extrémité de plaques (2) et par des barres de fermeture.

12. Appareil selon l'une quelconque des revendications 1 à 11, caractérisé en ce que la chambre (6A; 6B) se raccorde tangentiellement à ladite partie de corps (1).

## Patentansprüche

1. Fluidzirkulationsvorrichtung, mit einem Körperabschnitt (1), der eine Fluideintrittsfläche (3) oder Fluidaustrittsfläche aufweist, und einer Fluideintrittskammer/Fluidaustrittskammer (6; 6A, 6B), die mit dieser Fläche dicht verbunden ist, dadurch gekennzeichnet, daß wenigstens ein Teil der Kammer durch wenigstens einen Kugel- oder Ellipsoidabschnitt (20; 20A; 20B) und durch Kegelsektoren (22; 22A), die zu diesem Kugel- oder Ellipsoidabschnitt tangential sind und deren extreme Erzeugende dichte Verbindungslinien zwischen der Kammer und dem Körperabschnitt bilden, gebildet ist.

2. Vorrichtung nach Anspruch 1, dadurch gekennzeichnet, daß die Kammer (6A; 6B) mit dem gesamten Umfang (8 bis 10) der Fläche (3), die rechteckig oder quadratisch ist, verbunden ist, und daß die Kammer (6A; 6B) einerseits zwei erste Oberflächen (20A; 20B) in Form von Kugel- oder Ellipsoidabschnitten enthält, wobei diese ersten Oberflächen zu den gegenüberliegenden Seiten des Rechtecks oder des Quadrats im wesentlichen tangential sind, und andererseits vier zweite Oberflächen (22A) in Form von Kegelsektoren, deren Spitzen sich an den vier Ecken der Oberfläche befinden und die paarweise zu den beiden ersten Oberflächen (20A; 20B) tangential sind, enthält.

3. Vorrichtung nach Anspruch 2, dadurch gekennzeichnet, daß die Kugel- oder Ellipsoidabschnitte Viertelabschnitte einer Kugel bzw. eines Ellipsoids sind, wovon eine Meridianebene in der Fläche (3) liegt, und daß die Kegelsektoren (22A) Halbkegel mit einem Öffnungswinkel von 90° sind.

4. Vorrichtung nach Anspruch 2 oder 3, dadurch gekennzeichnet, daß die Fläche (3) quadratisch ist und daß die beiden ersten Oberflächen an einer einzigen Kugeloberfläche (20A) vereinigt sind.

5. Vorrichtung nach Anspruch 2 oder 3, dadurch gekennzeichnet, daß die Fläche (3) zwei kleine Seiten und zwei große Seiten enthält, daß die gegenüberliegenden Seiten die kleinen Seiten sind und daß die Kammer (6B) außerdem eine zylindrische Oberfläche (30) aufweist, die mit den zur Fläche senkrechten kreisförmigen Rändern der beiden ersten Oberflächen (20B) verbunden ist.

6. Vorrichtung nach irgendeinem der Ansprüche 1 bis 5, dadurch gekennzeichnet, daß die Kammer ein Versorgungs- oder Entleerungsrohr (24, 25; 27) aufweist, das direkt in den Kugel- oder Ellipsoidabschnitt (20; 20A; 20B) gestochen ist.

7. Vorrichtung nach irgendeinem der Ansprüche 1 bis 5, dadurch gekennzeichnet, daß die Kammer ein Versorgungs- oder Entleerungsrohr (27) enthält, das in den Kugel- oder Ellipsoidabschnitt (20A) über eine Übergangsfläche in Form eines Kegelstumpfs gestochen ist, die insbesondere zum Kugel- oder Ellipsoidabschnitt tangential ist.

8. Vorrichtung nach irgendeinem der Ansprüche 1 bis 7, dadurch gekennzeichnet, daß die Kammer in bezug auf den Körperabschnitt (1) über die Fläche (3) vorsteht und außerdem mit der benachbarten Fläche (11) des Körperabschnitts dicht verbunden ist

9. Vorrichtung nach Anspruch 8, dadurch gekennzeichnet, daß der Kugel- oder Ellipsoidabschnitt (20) eine Halbkugel oder ein Halbellipsoid ist, der die Verbindungskante (7) der beiden Flächen (3, 11) bedeckt, und daß die Kammer (6) außerdem einen weiteren Abschnitt (12) enthält, der aus drei zylindrischen Oberflächen (13, 15, 16) mit zueinander senkrechten Achsen gebildet ist.

10. Vorrichtung nach irgendeinem der Ansprüche 1 bis 9, dadurch gekennzeichnet, daß die Kammer vollständig aus insbesondere kugel- oder ellipsoidförmigen, konischen und zylindrischen Oberflächen gebildet ist, die tangential miteinander verbunden sind.

11. Vorrichtung nach irgendeinem der Ansprüche 1 bis 10, dadurch gekennzeichnet, daß der Körperabschnitt (1) aus einem Stapel paralleler Platten (2), die zwischen sich flache Durchlässe definieren, aus Wellenabstandshaltern, die zwischen diesen Platten angeordnet sind, und aus Durchlaßverschlußstäben gebildet ist, wobei die Stäbe dem Fluid entsprechen und einen Eingang oder einen Ausgang für dieses Fluid in der Fläche (3) freilassen, und daß die Kammer (6; 6A; 6B) mit dem Körperabschnitt (1) nur in den Zonen (3, 11; 3) derselben, die durch Endscheiben der Platten (2) und durch die Verschlußstäbe gebildet sind, verbunden ist.

12. Vorrichtung nach irgendeinem der Ansprüche 1 bis 11, dadurch gekennzeichnet, daß die Kammer (6A; 6B) mit dem Körperabschnitt (1) tangential verbunden ist.

## Claims

1. Apparatus for the circulation of a fluid comprising a body part (1) which comprises a face (3) for the inlet or outlet of a fluid, and an inlet/outlet chamber (6; 6A; 6B) for the said fluid, connected by a sealed joint to this face, characterised by the fact that one part at least of the chamber is formed by at least one portion of a sphere or ellipsoid (20; 20A; 20B) and by sectors of cones (22; 22A) at a tangent to this portion of a sphere or ellipsoid and the extreme generating line of which forms the lines of the sealed link of the chamber to the said part of the body.

2. Apparatus according to claim 1, characterised by the fact that the chamber (6A; 6B) is linked to the totality of the periphery (8 to 10) of the said face (3), which is rectangular or square, and with regard to the chamber (6A; 6B) comprises, on one hand, two initial surfaces (20A; 20B) in the form of portions of a sphere or ellipsoid, these initial surfaces being virtually tangential to the two opposite sides of the rectangle or square, and on the other hand, four second surfaces (22A) in the form of sectors of cones the summits of which are situated in the four corners of the said face, respectively, and tangential in twos to the two initial surfaces (20A; 20B).

3. Apparatus according to claim 2, characterised by the fact that the said portions of the sphere or ellipsoid are quarters of a sphere or ellipsoid a meridian plane of which is contained in the said face (3), and in that the sectors of the cones (22A) are semi-cones with a opening of 90°.

4. Apparatus according to claim 2 or 3 characterised by the fact that the said face (3) is square and in that these two initial surfaces are brought together on a single spherical surface (20A).

5. Apparatus according to claim 2 or 3 characterised by the fact that the said face (3) comprises two small sides and two large sides, in that the said opposite sides are small sides and in that the chamber (6B) also comprises a cylindrical surface (3) linked to the circular edges, perpendicular to the said face, of the two initial surfaces (20B).

6. Apparatus according to any of claims 1 to 5 characterised by the fact that the chamber comprises a supply or removal pipe (24; 25; 27) inserted directly on the portion of the sphere or ellipsoid (20; 20A; 20B)

7. Apparatus according to any of claims 1 to 5 characterised by the fact that the chamber comprises a supply or removal pipe (27) inserted in the portion of the sphere or ellipsoid (20A) by means of a transition surface (28) in the form of a truncated cone, notably tangential to the portion of the sphere or ellipsoid.

8. Apparatus according to any of claims 1 to 7 characterised by the fact that the chamber projects, in relation to the said part of the body (1), beyond the said face (3), and is also linked to the sealed joint to the adjacent face (11) of the said part of the body.

9. Apparatus according to claim 8, characterised by the fact that the portion of the sphere or ellipsoid (2) is a semi-sphere or a semi-ellipsoid covering the sharp edge (7) of the junction of the two faces (3, 11), and in that the chamber (6) also comprises another part (12) formed from three cylindrical surfaces (13, 15, 16) with perpendicular axes to one another.

10. Apparatus according to any of claims 1 to 9 characterised by the fact that the chamber is entirely formed from surfaces, notably spherical or ellipsoid, conical and cylindrical which are connected tangentially to one another.

11. Apparatus according to any of claims 1 to 10 characterised by the fact that the said part of the body (1) is formed by a piling up of parallel plates (2) defining amongst them flat passages, strut waves placed between these plates, and closure bars for these passages, the bars corresponding to the said fluid leaving an inlet or outlet free for this fluid on the said face (3), and in that the chamber (6; 6A; 6B) is only linked to the said part of the body (1) on the zones (3, 11; 3) of the latter formed by sections of the extremity of the plates (2) and by the closure bars.

12. Apparatus according to any of claims 1 to 11 characterised by the fact that the chamber (6A; 6B) is connected tangentially to the said part of the body (1).
